# EUROPEAN PATENT APPLICATION

(11) **EP 3 015 798 A1**
(43) Date of publication of application: **04.05.2016**
(21) Application number: 15192000.6
(22) Date of filing: 29.10.2015
(51) Int. Cl.: F25B 49/02, F25B 1/10, F25B 9/00

(54) **CONTROL DEVICE FOR REFRIGERATION CYCLE, REFRIGERATION CYCLE, AND CONTROL METHOD FOR REFRIGERATION CYCLE**

(30) Priority: 31.10.2014 JP 2014222897
(71) Applicant: MITSUBISHI HEAVY INDUSTRIES, LTD., Tokyo 108-8215 (JP)
(72) Inventor: TAKEDA, Takeshi, MINATO-KU, TOKYO, 108-8215 (JP); MURAKAMI, Kenichi, MINATO-KU, TOKYO, 108-8215 (JP); SATO, Hitonobu, Nagoya-shi, Aichi, 453-0862 (JP)
(74) Representative: Intès, Didier Gérard André

(57) **Abstract**

In a refrigeration cycle (10), a high-pressure compressor (12B), a low-pressure compressor (12A), a gas cooler (14), a first expansion valve (16), a second expansion valve (20), and an evaporator (22) are connected in this order by a refrigerant pipe (24), and a refrigerant is used in the supercritical region. Based on the temperature of outside air that is to exchange heat with the refrigerant at the gas cooler (14) and the operational state required in the refrigeration cycle (10), a control device (46) for the refrigeration cycle (10) controls the outlet pressure of the gas cooler (14) and the quantity of air for the gas cooler (14). Accordingly, the control device (46) allows for more efficient operation in the refrigeration cycle (10) that uses the refrigerant in the supercritical region.

## Description

### {Technical Field}

The present invention relates to control devices for refrigeration cycles, refrigeration cycles, and control methods for refrigeration cycles.

### {Background Art}

A refrigeration cycle that uses a refrigerant in the supercritical region, such as CO₂, has been developed.

In such a refrigeration cycle, two-stage compression is performed by using a low-pressure compressor, which performs compression from the evaporator pressure to intermediate pressure, and a high-pressure compressor, which performs compression from the intermediate pressure to the radiator pressure. A portion of the refrigerant at the outlet of the radiator is extracted (gas-injected) toward the inlet side of the high-pressure compressor.

In order to enhance efficiency in a refrigeration cycle that uses the refrigerant in the supercritical region, PTL 1 discloses a method of controlling a decompression valve at the high-pressure side so that the relationship between the CO₂ temperature and the CO₂ pressure at the outlet of the radiator becomes a temperature-pressure relationship indicated by an optimal control line.

### {Citation List}

### {Patent Literature}

[PTL 1] Japanese Unexamined Patent Application, Publication No. Hei 10-115470

### {Summary of Invention}

### {Technical Problem}

However, in the refrigeration cycle discussed in PTL 1, the rotation speed of a fan provided for the radiator (gas cooler) is not controlled, and it is considered that the rotation speed of the fan is fixed at the maximum value.

Therefore, in the refrigeration cycle discussed in PTL 1, there is a case where efficient operation is not achieved due to excessive power used for the fan.

The present invention has been made in view of such circumstances and an object thereof is to provide a control device for a refrigeration cycle, a refrigeration cycle, and a control method for a refrigeration cycle that allow for more efficient operation in a refrigeration cycle that uses a refrigerant in the supercritical region.

### {Solution to Problem}

In order to solve the aforementioned problems, a control device for a refrigeration cycle, a refrigeration cycle, and a control method for a refrigeration cycle according to the present invention employ the following solutions.

According to a first aspect of the present invention, there is provided a control device for a refrigeration cycle in which a compressor, a radiator, an expansion valve, and an evaporator are connected in this order by a refrigerant pipe and that uses a refrigerant in a supercritical region. The control device for the refrigeration cycle sets an outlet pressure of the radiator and controls a quantity of air for the radiator based on a temperature of outside air, which is to exchange heat with the refrigerant at the radiator, and an operational state required in the refrigeration cycle.

In the refrigeration cycle according to this configuration, the compressor, the radiator, the expansion valve, and the evaporator are connected in this order by the refrigerant pipe, and the refrigerant is used in the supercritical region.

With regard to the refrigerant in the supercritical region, the relationship between saturation pressure and saturation temperature is not uniquely set as in the critical region. The saturation pressure may vary even when the saturation temperature is the same. Moreover, even when the saturation temperature is the same, the specific enthalpy may vary if the saturation pressure changes. In other words, although the outlet temperature of the radiator is dependent on the temperature of the outside air, the outlet pressure of the radiator is not set solely based on the temperature of the outside air.

Based on the temperature of the outside air and the operational state required in the refrigeration cycle, the outlet pressure of the radiator is set and the quantity of air for the radiator is controlled. Specifically, since the outlet pressure of the radiator is not set solely based on the temperature of the outside air, the outlet pressure is controlled to an optimal value based on the temperature of the outside air and the operational state required in the refrigeration cycle.

Furthermore, the quantity of air for the radiator is also controlled based on the temperature of the outside air and the operational state required in the refrigeration cycle such that the required performance of the radiator is satisfied. The air-quantity control is performed by controlling the rotation speed of a fan provided for the radiator.

Accordingly, in this configuration, based on the operational state required in the refrigeration cycle with reference to the temperature of the outside air, the outlet pressure of the radiator is set and the quantity of air for the radiator is controlled, so that the rotation speed of the fan provided for the radiator can be set to an appropriate rotation speed corresponding to the operational state required in the refrigeration cycle, thereby allowing for more efficient operation.

In the first aspect described above, the control device for the refrigeration cycle may include a high-pressure setting means that sets the outlet pressure of the radiator based on the temperature of the outside air and required performance or a coefficient of performance required in the refrigeration cycle; and an air-quantity setting means that sets the quantity of air for the radiator based on the temperature of the outside air and a required evaporation temperature of the refrigerant.

According to this configuration, an optimal value for the outlet pressure of the radiator is set by the high-pressure setting means based on the temperature of the outside air and the required performance or the coefficient of performance required in the refrigeration cycle.

Furthermore, the quantity of air for the radiator is set by the air-quantity setting means based on the temperature of the outside air and the required evaporation temperature of the refrigerant. More specifically, the required performance of the radiator is set based on the temperature of the outside air and the evaporation temperature of the refrigerant. Then, the quantity of air for the radiator for satisfying the required performance of the radiator is set.

Accordingly, in this configuration, more optimal outlet pressure of the radiator and a more optimal quantity of air for the radiator can be set.

In the first aspect described above, the expansion valve may include two or more expansion valves provided between the radiator and the evaporator, and the outlet pressure of the radiator may be adjusted by the expansion valve provided at a side of the radiator.

According to this configuration, two-stage expansion is performed by using the two expansion valves, so that the expansion valve provided at the radiator can be used for controlling the high pressure, whereby the outlet pressure of the radiator can be controlled with higher accuracy.

According to a second aspect of the present invention, there is provided a refrigeration cycle in which a compressor, a radiator, an expansion valve, and an evaporator are connected in this order by a refrigerant pipe and that uses a refrigerant in a supercritical region. The refrigeration cycle includes the aforementioned control device.

According to a third aspect of the present invention, there is provided a control method for a refrigeration cycle in which a compressor, a radiator, an expansion valve, and an evaporator are connected in this order by a refrigerant pipe and that uses a refrigerant in a supercritical region. The control method for the refrigeration cycle includes setting an outlet pressure of the radiator and controlling a quantity of air for the radiator based on the temperature of outside air, which is to exchange heat with the refrigerant at the radiator, and an operational state required in the refrigeration cycle.

### {Advantageous Effects of Invention}

The present invention advantageously allows for more efficient operation in a refrigeration cycle that uses a refrigerant in the supercritical region.

### {Brief Description of Drawings}

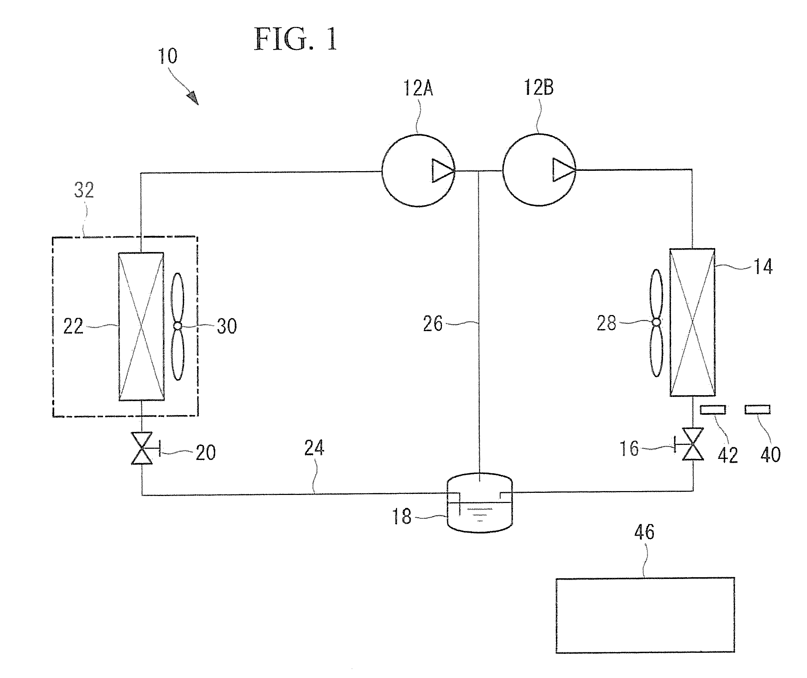

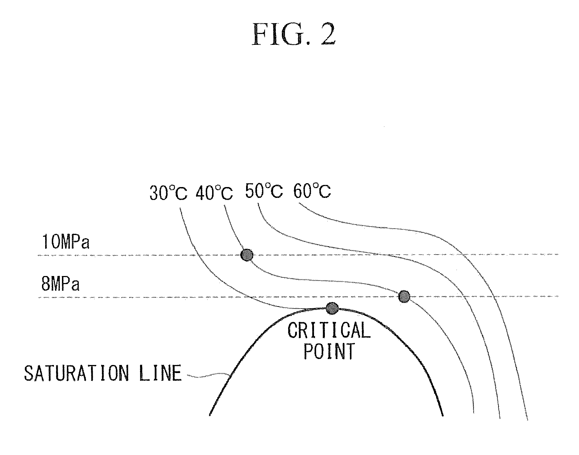

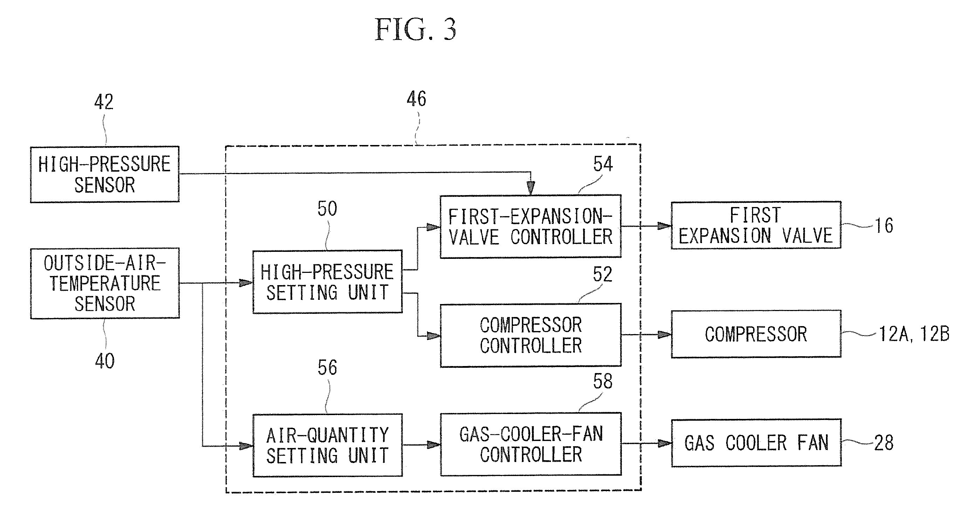

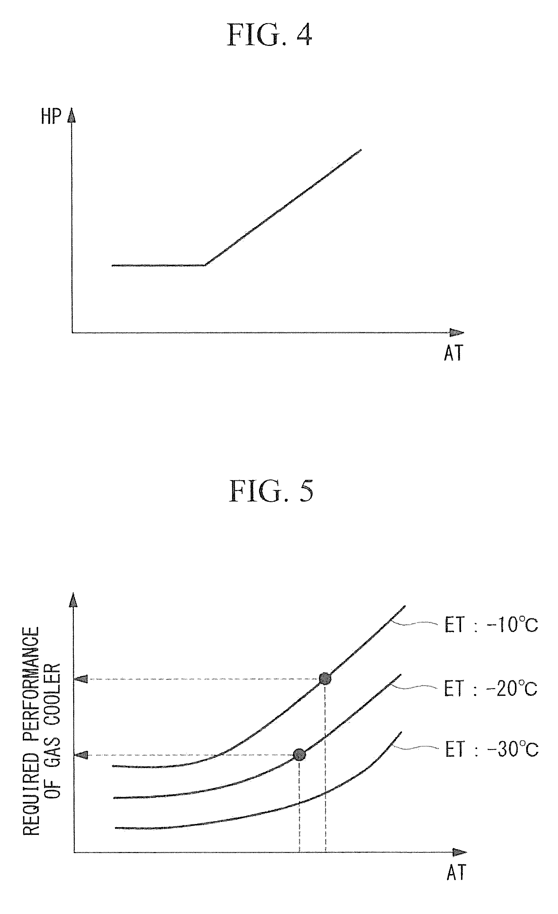

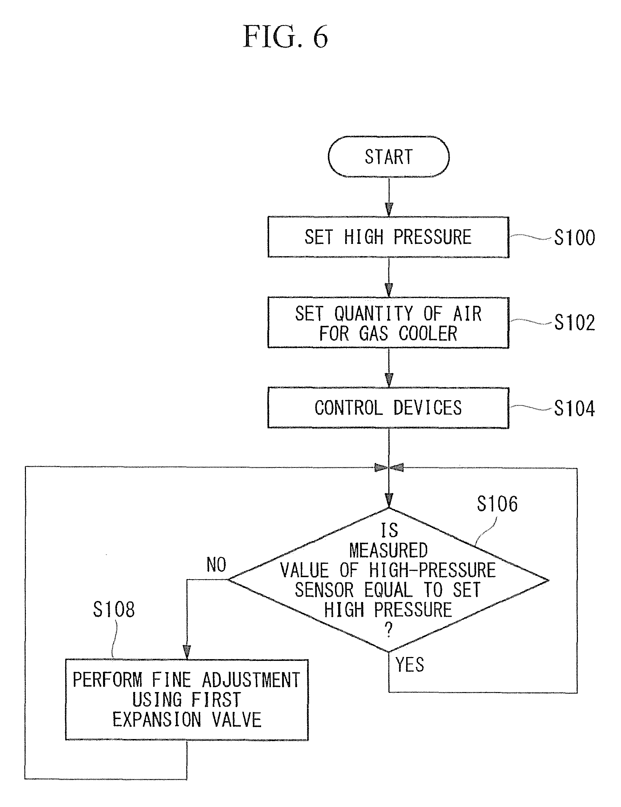

{Fig. 1} Fig. 1 is a circuit configuration diagram of a refrigeration cycle according to an embodiment of the present invention.
{Fig. 2} Fig. 2 is a p-h diagram showing a supercritical region of CO₂.
{Fig. 3} Fig. 3 is a functional block diagram illustrating functions related to gas-cooler control performed by a control device according to the embodiment of the present invention.
{Fig. 4} Fig. 4 illustrates the relationship between outside-air temperature and high pressure in accordance with the embodiment of the present invention.
{Fig. 5} Fig. 5 illustrates the outside-air temperature and the required performance of a gas cooler, according to evaporation temperature, in accordance with the embodiment of the present invention.
{Fig. 6} Fig. 6 is a flowchart illustrating the flow of the gas-cooler control according to the embodiment of the present invention.

### {Description of Embodiments}

An embodiment of a refrigeration cycle 10 according to the present invention will be described below with reference to the drawings.

Fig. 1 is a circuit configuration diagram of the refrigeration cycle 10 according to this embodiment.

The refrigeration cycle 10 according to this embodiment uses, for example, CO₂ as a refrigerant in the supercritical region.

The refrigeration cycle 10 is a two-stage compression cycle in which a low-pressure compressor 12A, a high-pressure compressor 12B, a gas cooler 14, a first expansion valve 16, a receiver 18, a second expansion valve 20, and an evaporator 22 are connected in this order by a refrigerant pipe 24. Furthermore, there is also provided an injection pipe 26 that supplies a gas refrigerant, which is obtained as a result of gas-liquid separation at the receiver 18, toward the inlet side of the high-pressure compressor 12B.

The low-pressure compressor 12A takes in the refrigerant from the evaporator 22, compresses this refrigerant, and discharges the refrigerant toward the high-pressure compressor 12B.

The high-pressure compressor 12B is connected in series with the low-pressure compressor 12A, takes in the refrigerant from the low-pressure compressor 12A and the injection pipe 26, compresses this refrigerant, and discharges the refrigerant toward the gas cooler 14.

The gas cooler 14 performs heat exchange between the high-temperature high-pressure (supercritical) refrigerant discharged from the high-pressure compressor 12B and outside air blown in by a gas cooler fan 28 so as to cause the refrigerant to dissipate heat.

The first expansion valve 16 causes the refrigerant that has dissipated heat at the gas cooler 14 to adiabatically expand, so as to decompress the refrigerant. In other words, the first expansion valve 16 adjusts the outlet pressure (referred to as "high pressure" hereinafter) of the gas cooler 14.

The receiver 18 performs gas-liquid separation on the refrigerant. The liquid-phase refrigerant flows from the receiver 18 toward the evaporator 22. On the other hand, the gas-phase refrigerant flows from the receiver 18 toward the high-pressure compressor 12B via the injection pipe 26.

The second expansion valve 20 causes the refrigerant flowing toward the evaporator 22 to adiabatically expand, so as to decompress the refrigerant. In other words, the second expansion valve 20 adjusts the inlet pressure of the evaporator 22.

The evaporator 22 performs heat exchange between the refrigerant decompressed at the second expansion valve 20 and air blown in by an evaporator fan 30 so as to cause the refrigerant to absorb heat.

For example, the evaporator 22 is provided within a refrigerated showcase 32 that stores ice cream and performs heat exchange between the refrigerant and the atmosphere within the refrigerated showcase 32. Thus, the interior of the refrigerated showcase 32 is maintained at low temperature (e.g., an evaporation temperature of -45°C).

The refrigeration cycle 10 includes an outside-air-temperature sensor 40 and a high-pressure sensor 42.

The outside-air-temperature sensor 40 measures the temperature of outside air (referred to as "outside-air temperature" hereinafter) which is to undergo heat exchange at the gas cooler 14.

The high-pressure sensor 42 measures the outlet pressure (referred to as "high pressure" hereinafter) of the gas cooler 14.

The refrigeration cycle 10 also includes a control device 46 that controls the refrigeration cycle 10. The control device 46 controls, for example, the high-pressure compressor 12B, the low-pressure compressor 12A, the first expansion valve 16, the second expansion valve 20, the gas cooler fan 28, and the evaporator fan 30.

The control device 46 is composed of, for example, a central processing unit (CPU), a random access memory (RAM), a read-only memory (ROM), and a computer-readable storage medium. A series of processes for achieving various functions is stored in, for example, the storage medium in the form of a program. The CPU loads this program to, for example, the RAM and executes information processing and calculation so that the various functions are achieved. The program may be preinstalled in the ROM or another storage medium, may be provided by being stored in the computer-readable storage medium, or may be distributed via wired or wireless communication means. The computer-readable storage medium is, for example, a magnetic disk, a magneto-optical disk, a compact disc read-only memory (CD-ROM), a digital versatile disc read-only memory (DVD-ROM), or a semiconductor memory.

Gas-cooler control executed by the control device 46 will now be described. In the gas-cooler control according to this embodiment, the high pressure and the quantity of air for the gas cooler 14 (i.e., the rotation speed of the gas cooler fan 28) are controlled.

As described above, in the refrigeration cycle 10 according to this embodiment, a CO₂ refrigerant is used in the supercritical region. With regard to a refrigerant in the supercritical region, the relationship between saturation pressure and saturation temperature is not uniquely set as in the critical region. As shown in Fig. 2, the saturation pressure may vary even when the saturation temperature is the same. Moreover, even when the saturation temperature is the same, the specific enthalpy may vary if the saturation pressure changes. In other words, although the outlet temperature of the gas cooler 14 is dependent on the outside-air temperature, the high pressure is not set solely based on the outside-air temperature. Even when the outlet temperature of the gas cooler 14 is the same, the refrigeration effect may be affected if the high pressure changes.

In the refrigeration cycle 10 according to this embodiment, the high pressure is set and the quantity of air for the gas cooler 14 is controlled based on the outside-air temperature and the operational state required in the refrigeration cycle 10.

Specifically, since the high pressure is not set solely based on the outside-air temperature, the high pressure is controlled to an optimal value based on the outside-air temperature and the operational state required in the refrigeration cycle 10.

Furthermore, the quantity of air for the gas cooler 14 is also controlled based on the outside-air temperature and the operational state required in the refrigeration cycle 10 such that the required performance of the gas cooler 14 is satisfied. The air-quantity control is performed by controlling the rotation speed of the gas cooler fan 28.

Accordingly, based on the operational state required in the refrigeration cycle 10 with reference to the outside-air temperature, the refrigeration cycle 10 according to this embodiment sets the outlet pressure of the gas cooler 14 and controls the quantity of air for the gas cooler 14, so that the rotation speed of the gas cooler fan 28 can be set to an appropriate rotation speed corresponding to the operational state required in the refrigeration cycle 10.

As will be described later, the operational state required in the refrigeration cycle 10 is, for example, the required performance or a coefficient of performance (COP) required in the refrigeration cycle 10, or a required evaporation temperature of the refrigerant.

Fig. 3 is a functional block diagram illustrating functions related to the gas-cooler control performed by the control device 46 according to this embodiment.

The control device 46 includes a high-pressure setting unit 50, a compressor controller 52, a first-expansion-valve controller 54, an air-quantity setting unit 56, and a gas-cooler-fan controller 58.

The high-pressure setting unit 50 sets the high pressure based on the outside-air temperature and the required performance or the coefficient of performance (COP) required in the refrigeration cycle 10.

As the outside-air temperature, a measured value of the outside-air temperature obtained by the outside-air-temperature sensor 40 is input to the high-pressure setting unit 50.

The compressor controller 52 controls the low-pressure compressor 12A and the high-pressure compressor 12B so that they discharge the refrigerant with the set high pressure (referred to as "set high pressure" hereinafter).

The first-expansion-valve controller 54 outputs a control command to the first expansion valve 16 and finely adjusts the high pressure so that the high pressure becomes equal to the set high pressure. Specifically, the first-expansion-valve controller 54 compares an input measured value from the high-pressure sensor 42 with the set high pressure and controls the first expansion valve 16 by feedback control so that the measured value becomes equal to the set high pressure.

The air-quantity setting unit 56 sets the quantity of air for the gas cooler 14 based on the outside-air temperature and the required evaporation temperature of the refrigerant.

As the evaporation temperature of the refrigerant, a set evaporation temperature value is input to the high-pressure setting unit 50.

The gas-cooler-fan controller 58 controls the rotation speed of the gas cooler fan 28 such that the air quantity set by the air-quantity setting unit 56 is achieved.

Next, a specific process performed by the high-pressure setting unit 50 and the air-quantity setting unit 56 will be described.

Fig. 4 illustrates an example of the relationship between outside-air temperature (AT) and high pressure (HP) in accordance with this embodiment.

As shown in Fig. 4, the control device 46 according to this embodiment increases the high pressure with respect to the refrigerant in the supercritical region as the outside-air temperature increases, and sets the high pressure to a fixed value if the outside-air temperature is lower than or equal to a predetermined temperature near the critical point.

The reason for this is that, in the supercritical region, a change in pressure relative to a change in temperature is small at a temperature near the critical point. Therefore, if the outside-air temperature is near the critical point, the high pressure is set to a fixed value that allows the low-pressure compressor 12A and the high-pressure compressor 12B to require low power. If the outside-air temperature is high, the high pressure is set in a region in which a pressure change caused by a temperature change is small. This allows for simple controllability of the high pressure.

The relationship between the outside-air temperature and the high pressure shown in Fig. 4 is set and stored in advance by, for example, simulation in accordance with the required performance or the coefficient of performance (COP) required in the refrigeration cycle 10. The high-pressure setting unit 50 sets the high pressure based on information indicating the relationship between the outside-air temperature and the high pressure shown in the example in Fig. 4.

The quantity of air for the gas cooler 14 is based on the required performance of the gas cooler 14.

As shown in Fig. 5, the required performance of the gas cooler 14 is determined from the outside-air temperature and the evaporation temperature (ET). The required performance of the gas cooler 14 and the air quantity have a correlative relationship. Therefore, the air-quantity setting unit 56 determines the required performance of the gas cooler 14 from the relationship among the outside-air temperature, the evaporation temperature, and the required performance of the gas cooler 14 shown in the example in Fig. 5, and sets the air quantity that corresponds to the required performance of the gas cooler 14.

Alternatively, the air-quantity setting unit 56 may store in advance information indicating the relationship among the outside-air temperature, the required evaporation temperature of the refrigerant, and the quantity of air for the gas cooler 14, and may set the quantity of air for the gas cooler 14 directly based on the outside-air temperature and the required evaporation temperature of the refrigerant without having to determine the required performance of the gas cooler 14.

Accordingly, the control device 46 stores therein the information indicating the high pressure corresponding to the outside-air temperature, as shown in Fig. 4, and the information indicating the outside-air temperature and the required performance of the gas cooler 14 corresponding to the evaporation temperature, as shown in Fig. 5, so that the high pressure and the quantity of air for the gas cooler 14 can be readily set based on the outside-air temperature.

Fig. 6 is a flowchart illustrating the flow of the gas-cooler control. The gas-cooler control commences when the refrigeration cycle 10 starts operating.

First, in step 100, the high-pressure setting unit 50 sets the high pressure.

Subsequently, in step 102, the air-quantity setting unit 56 sets the air quantity.

Then, in step 104, the various devices are controlled.

Specifically, the compressor controller 52 controls the low-pressure compressor 12A and the high-pressure compressor 12B so that they discharge the refrigerant with the high pressure set by the high-pressure setting unit 50. Furthermore, the gas-cooler-fan controller 58 controls the rotation speed of the gas cooler fan 28 such that the air quantity set by the air-quantity setting unit 56 is achieved.

When the rotation speed of the gas cooler fan 28 is controlled and the quantity of air for the gas cooler 14 changes, there is a possibility that a deviation may occur between the measured value of the high-pressure sensor 42 and the set high pressure.

In step 106, it is determined whether or not the measured value of the high-pressure sensor 42 is equal to the set high pressure. If a negative determination result is obtained, the process proceeds to step 108. If a positive determination result is obtained, step 106 is repeated at a predetermined time interval.

In step 108, the first-expansion-valve controller 54 finely adjusts the degree of opening of the first expansion valve 16 by feedback control so that the measured value of the high-pressure sensor 42 becomes equal to the set high pressure. The process then returns to step 106.

Accordingly, in the refrigeration cycle 10 according to this embodiment, two-stage expansion is performed by the first expansion valve 16 and the second expansion valve 20 so that the first expansion valve 16 can be used for controlling the high pressure, whereby the outlet pressure of the gas cooler 14 can be controlled with higher accuracy.

As described above, in the refrigeration cycle 10 according to this embodiment, the high-pressure compressor 12B, the low-pressure compressor 12A, the gas cooler 14, the first expansion valve 16, the second expansion valve 20, and the evaporator 22 are connected in this order by the refrigerant pipe 24, and the refrigerant is used in the supercritical region. Based on the temperature of outside air that is to exchange heat with the refrigerant at the gas cooler 14 and the operational state required in the refrigeration cycle 10, the control device 46 for the refrigeration cycle 10 sets the outlet pressure of the gas cooler 14 and controls the quantity of air for the gas cooler 14.

Accordingly, based on the operational state required in the refrigeration cycle 10 with reference to the outside-air temperature, the refrigeration cycle 10 according to this embodiment sets the outlet pressure of the gas cooler 14 and controls the quantity of air for the gas cooler 14, so that the rotation speed of the gas cooler fan 28 can be set to an appropriate rotation speed corresponding to the operational state required in the refrigeration cycle 10, thereby allowing for more efficient operation.

Although the present invention has been described above with reference to the above embodiment, the technical scope of the present invention is not limited to the scope defined in the above embodiment. Various modifications and alterations may be added to the above embodiment so long as they do not depart from the scope of the invention, and embodiments with such modifications and alterations added thereto are included in the technical scope of the present invention. Moreover, the embodiments described above may be appropriately combined.

For example, although the refrigeration cycle 10 is described as being applied to a refrigerator in the above embodiment, the present invention is not limited to this. The refrigeration cycle 10 may alternatively be applied to an air-conditioning device that performs heating and cooling.

Furthermore, although the refrigeration cycle 10 is described as being of a two-stage compression type in the above embodiment, the present invention is not limited to this. The refrigeration cycle 10 may alternatively be of a single-stage compression type.

Furthermore, although two-stage expansion is performed by using two expansion valves, namely, the first expansion valve 16 and the second expansion valve 20, in the above embodiment, the present invention is not limited to this. An embodiment that uses a single expansion valve or three or more expansion valves is also possible.

Furthermore, the flow of the gas-cooler control described in the above embodiment is an example. Unnecessary steps may be deleted, new steps may be added, or the processing order may be interchanged so long as it does not depart from the scope of the present invention.

### {Reference Signs List}

- 10: refrigeration cycle
- 12A: low-pressure compressor
- 12B: high-pressure compressor
- 14: gas cooler
- 16: first expansion valve
- 20: second expansion valve
- 22: evaporator
- 24: refrigerant pipe
- 46: control device
- 50: high-pressure setting unit
- 56: air-quantity setting unit

## Claims

1. A control device (46) for a refrigeration cycle (10) in which a compressor (12A, 12B), a radiator (14), an expansion valve (16, 20), and an evaporator (22) are connected in this order by a refrigerant pipe (24) and that uses a refrigerant in a supercritical region,
wherein the control device (46) for the refrigeration cycle (10) is configured to set an outlet pressure of the radiator (14) and to control a quantity of air for the radiator (14) based on a temperature of outside air, which is to exchange heat with the refrigerant at the radiator (14), and an operational state required in the refrigeration cycle (10).

2. The control device (46) for the refrigeration cycle (10) according to Claim 1, comprising:
a high-pressure setting means configured to set the outlet pressure of the radiator (14) based on the temperature of the outside air and required performance or a coefficient of performance required in the refrigeration cycle (10); and
an air-quantity setting means configured to set the quantity of air for the radiator (14) based on the temperature of the outside air and a required evaporation temperature of the refrigerant.

3. The control device (46) for the refrigeration cycle (10) according to Claim 1 or 2,
wherein the expansion valve (16, 20) includes two or more expansion valves (16, 20) provided between the radiator (14) and the evaporator (22), and
wherein the expansion valve provided at a side of the radiator (14) is configured to adjust the outlet pressure of the radiator (14).

4. A refrigeration cycle (10) in which a compressor (12A, 12B), a radiator (14), an expansion valve (16, 20), and an evaporator (22) are connected in this order by a refrigerant pipe (24) and that uses a refrigerant in a supercritical region, the refrigeration cycle comprising:
the control device (46) according to any one of Claims 1 to 3.

5. A control method for a refrigeration cycle (10) in which a compressor (12A, 12B), a radiator (14), an expansion valve (16, 20), and an evaporator (22) are connected in this order by a refrigerant pipe (24) and that uses a refrigerant in a supercritical region, the control method for the refrigeration cycle comprising:
setting an outlet pressure of the radiator (14) and controlling a quantity of air for the radiator (14) based on the temperature of outside air, which is to exchange heat with the refrigerant at the radiator, and an operational state required in the refrigeration cycle.
